Europäisches Patentamt

European Patent Office

Office européen des brevets

(19)

(11) **EP 0 495 530 B2**

(12) **NEW EUROPEAN PATENT SPECIFICATION**

(45) Date of publication and mention
of the opposition decision:
**25.08.1999 Bulletin 1999/34**

(45) Mention of the grant of the patent:
**15.03.1995 Bulletin 1995/11**

(51) Int Cl.⁶: **G11B 7/085**

(21) Application number: **92104637.1**

(22) Date of filing: **27.10.1982**

(54) **Method for recovering information from a selected track on a record disc**

Verfahren zur Wiedergabe von Information aus einer ausgewählten Spur einer Aufzeichnungsplatte

Méthode pour la reproduction de l'information d'une piste choisie d'un disque d'enregistrement

(84) Designated Contracting States:
**AT BE CH DE FR GB IT LI LU NL SE**

(30) Priority: **28.10.1981 US 316021**
**21.12.1981 US 333236**

(43) Date of publication of application:
**22.07.1992 Bulletin 1992/30**

(62) Document number(s) of the earlier application(s) in
accordance with Art. 76 EPC:
**85108998.7 / 0 167 177**
**82109936.3 / 0 078 060**

(73) Proprietor: **Discovision Associates**
**Irvine, CA 92614 (US)**

(72) Inventor: **Giddings, Gary Michael**
**Laguna Hills, California 92653 (US)**

(74) Representative: **Laight, Martin Harvey et al**
**W.H. Beck, Greener & Co.**
**7 Stone Buildings**
**Lincoln's Inn**
**London WC2A 3SZ (GB)**

(56) References cited:
EP-A- 0 007 199       DE-A- 2 341 349
DE-A- 2 403 094       DE-A- 2 718 092
GB-A- 2 010 550       GB-A- 2 034 080
GB-A- 2 037 460       GB-A- 2 056 118
US-A- 3 812 533       US-A- 4 106 058
US-A- 4 166 970

• SMPTE JOURNAL vol. 86, no. 2, February 1977,
SCARSDALE, US pages 80 - 83; M.MATHIEU: 'a
random access system adapted for the optical
video disc: its impacton information retrieval'
• H. Kaufmann: "Datenspeicher",
Oldenbourg-Verlag 1973, pp. 276-282

## Description

This invention relates generally to a method that moves an information recovery device rapidly toward a selected target track on a recording disc to recover information recorded on it The present invention has been divided from the published European Patent Application EP-A- 167177, which is a divisional application of published European Patent Application EP-A- 78060.

In a prior art arrangement (GB-A-2010550; EP-A-7199), a reading beam of light is directed at a selected one of a plurality of substantially circular and concentric recording tracks on a rotatable recording disc. The intensity of the beam is modulated by the recorded information, which includes a unique address signal for each track and the apparatus detects the modulated beam to produce a playback signal indicative of the recorded information.

In the search mode, the current address is compared to the target address, and the apparatus applies a prescribed sequence of drive signals to the carriage motor, depending on the remaining distance to the target track. With respect to GB-A-2010550 the read head is moved to the vicinity of the target address, which can be on either side of the target track, so that the search may begin after a reversal in direction, that is after once passing the target track in the coarse search mode. This is wasteful of precious search time. The speed of the carriage motor is stepped successively downwardly as the reading beam reaches predetermined distance thresholds during carriage translation. During the last stage of carriage translation, the movable mirror increments the beam radially by one track spacing during each revolution of the disc, thereby "playing" into the target track.

With respect to EP-A-O 007 199, a prescribed sequence of drive signals is applied to a carriage motor dependent on the distance to be travelled by the carriage to retrieve the selected information, the drive signals being successively stepped downward to intermittently redetermine carriage motor speed as predetermined location thresholds are reached during carriage translation. It is said that a continuous monitoring of carriage position relative to the target track could be derived by counting track crossings. However, such a technique would be preferable only at relatively high speeds of translation of the carriage. At high rates of translation of the carriage, the effects of false "track crossings" due to eccentricities will not be significant, but as the speed of the carriage slows towards a play speed their effects may prevent an accurate track count. Hence it is suggested that dependence will be shifted to detection of addresses as the carriage speed approaches play speed.

Whenever the system described above does not have an indication of the track currently being scanned, and thus of the remaining radial distance to the target track, the system will likely not drive the reading beam toward the target track in an optimum fashion. It should therefore be appreciated that there is a need for a system that provides a more accurate indication of the current location of the information recovery device in relationship to the target track and avoids excessive time delays, such that the device can be moved more rapidly in the direction of the target track, without overshooting it.

According to the present invention there is provided a method of locating an information-containing target track with a read beam of light from a plurality of substantially circular and concentric information-containing tracks on a rotatable optical recording disc, the method comprising the steps of:

rotating the disc in a prescribed fashion;
retrieving address information from one of said plurality of tracks to establish a present position for said read beam;
identifying a target track from said plurality of tracks;
moving said read beam relative to and radially of said disc toward said target track, in a coarse search mode, at a radial velocity greater than that exhibited during normal playback of the disc, from said present position to the vicinity of said target track; and
moving said beam radially of said disc in a fine search mode by jumping said read beam towards said target track across a plurality of tracks; retrieving information from the track arrived at upon completion of said jumping step to establish an updated position for said read beam, and repeating said jumping and retrieving steps at least during each revolution of the disc, until said updated position of said read beam is at said target track, each step of jumping said read beam radially across tracks being carried out in substantially less time than that required to rotate the disc through a half revolution,

characterised in that, in each said step of jumping said read beam radially across tracks, the number of tracks crossed by the read beam is counted, and, in response to the counting step, movement of the read beam is terminated after the read beam has crossed a prescribed number of tracks; in that said step of retrieving information from the track arrived at upon completion of said jumping step, to establish an updated position for said read beam, occurs during a next half revolution after the jumping step; and in that said jumping and retrieving steps in the fine search mode are repeated during each half revolution of the disc, until said updated position of said read beam is at said target track.

The recorded information can include, for example, a video signal with a unique address identifying each video frame, and the apparatus then operates to recover a selected target video frame recorded on a target track.

A separate video frame can be recorded on each track, in which case the disc is rotated at a constant angular velocity, regardless of the radius of the track being scanned. Alternatively, the video signal can be recorded with a more uniform recording density, in which case a variable number of frames are recorded on each track and the disc is rotated at an angular velocity that varies inversely with track radius. In this way, the disc moves at the same linear velocity past the information recovery device for all track radii. In the former case, the entire target track records the target video frame, whereas in the latter case, only a segment of the target track records the target frame.

Other aspects and advantages of the present invention will become apparent from the following description of a preferred embodiment.

BRIEF DESCRIPTION OF THE DRAWINGS

    FIG. 1 is a simplified block diagram of a signal recovery apparatus embodying the principles of the present invention;
    FIG. 2 is a block diagram of the tracking controller block in the apparatus of FIG. 1;
    FIG. 3 is a fragmentary cross-sectional view of three tracks on the recording disc of FIG. 1, and showing the open loop tracking error signal produced while the reading beam traverses radially across the tracks;
    FIG. 4 is a block diagram of the track scan driver block in the apparatus of FIG. 1;
    FIG. 5 is a graph of the radial velocity of the reading beam relative to the rotating disc, as a function of distance from the target track;
    FIG. 6 is a flowchart implemented by the apparatus of FIG. 1, for controllably varying the radial speed and direction of the reading beam relative to the disc; and
    FIG. 7 is a flowchart implemented by the address recovery and estimator circuit in the apparatus of FIG. 1, for updating the address register indicating the address of the track currently being scanned.

DESCRIPTION OF THE PREFERRED EMBODIMENT

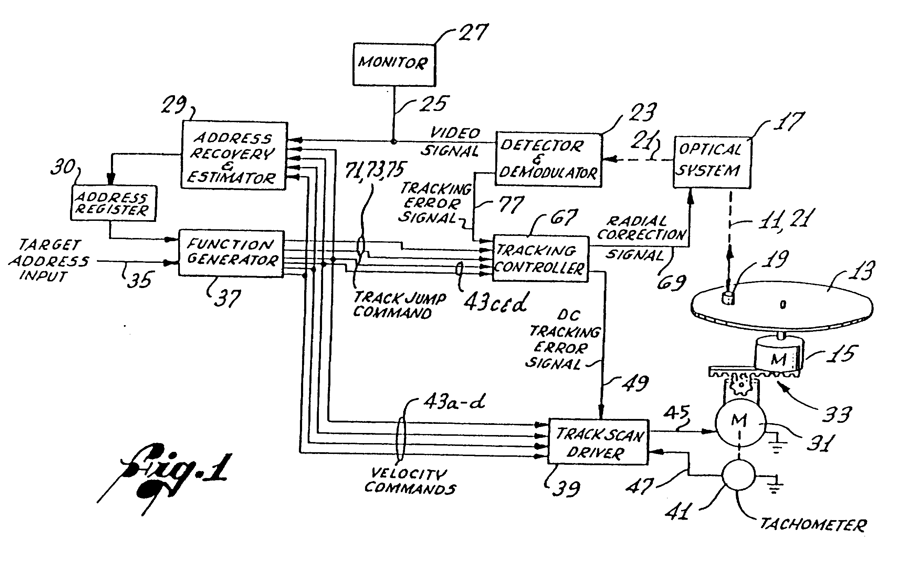

Referring now to the drawings, and particularly to FIG. 1, there is shown apparatus for moving a reading beam of light 11 in a radial direction relative to a rotating recording disc 13, to recover information from a selected target track on the disc. The disc includes a plurality of closely spaced, substantially circular and concentric recording tracks, and each track records a video signal representing one video frame, with a unique frame or track address signal located in each vertical interval (i. e., two address signals per track).

The apparatus includes a spindle motor 15 for rotating the recording disc 13 at a prescribed constant angular velocity, and an optical system 17 and an objective lens 19 for focusing the reading beam 11 onto a selected track of the rotating disc. The reading beam is reflected by the disc, to produce a reflected beam 21 having an intensity that is modulated in accordance with the recorded information. The objective lens and optical system direct this reflected beam to a detector 23, which detects and demodulates the modulated intensity of the beam, to produce a baseband video signal corresponding to the recorded information. This video signal is coupled over line 25 to both a monitor 27 and an address recovery and estimator circuit 29. The monitor provides a real-time display of the video signal recovered from the target track, and the address recovery circuit detects the address signals in the successive vertical intervals of the video signal, using conventional techniques. The address recovery circuit then updates an address register 30 with each detected track address signal.

The apparatus further includes a coarse positioning system and a fine positioning system for controllably moving the reading beam 11 radially relative to the disc 13, toward the selected target track on the disc. The coarse positioning system includes a carriage motor 31 and appropriate gearing 33 for moving the beam at a selected one of two relatively high radial velocities (e. g., 100 and 500 tracks per disc revolution). The fine positioning system includes a movable mirror (not shown) located in the optical system 17 for controllably adjusting the beam's point of impingement on the disc over a relatively small range (e.g., about 50 tracks in either direction).

When a user desires to recover information recorded on a selected target track on the disc 13, he inputs a special target address code signal on line 35, indicating the target track's address. A function generator 37 compares this target address signal with the address signal currently being stored by the address register 30. In accordance with a prescribed algorithm that will be described below, the function generator determines the radial separation between the current track and the target track, and outputs appropriate control signals to controllably drive the carriage motor 31 and the movable mirror of the optical system 17 so as to move the reading beam 11 toward the target track. These control signals are sequenced such that the beam reaches the target track in a time substantially less than that achieved by prior apparatus of this kind.

The carriage motor 31 is driven at a prescribed velocity (or sequence of velocities) until the reading beam 11 has been moved to within a prescribed number of tracks of the target track.

More particularly, the coarse positioning system further includes a track scan driver 39 and a carriage motor tachometer 41 for controllably driving the carriage motor 31 in the prescribed fashion. The function generator 37 outputs a plurality of velocity commands for coupling over lines 43a-d to the track scan driver, which, in turn, controllably adjusts a dc drive signal coupled over line 45 to the carriage motor. The tachometer feeds back to the track scan driver over line 47 a carriage tachometer signal indicating the carriage motor's angular velocity, to enhance control of that velocity. Also, a dc tracking error signal is coupled to the track scan driver over line 49, to controllably move the carriage motor so as to reduce any steady state deflection of the movable mirror of the optical system 17.

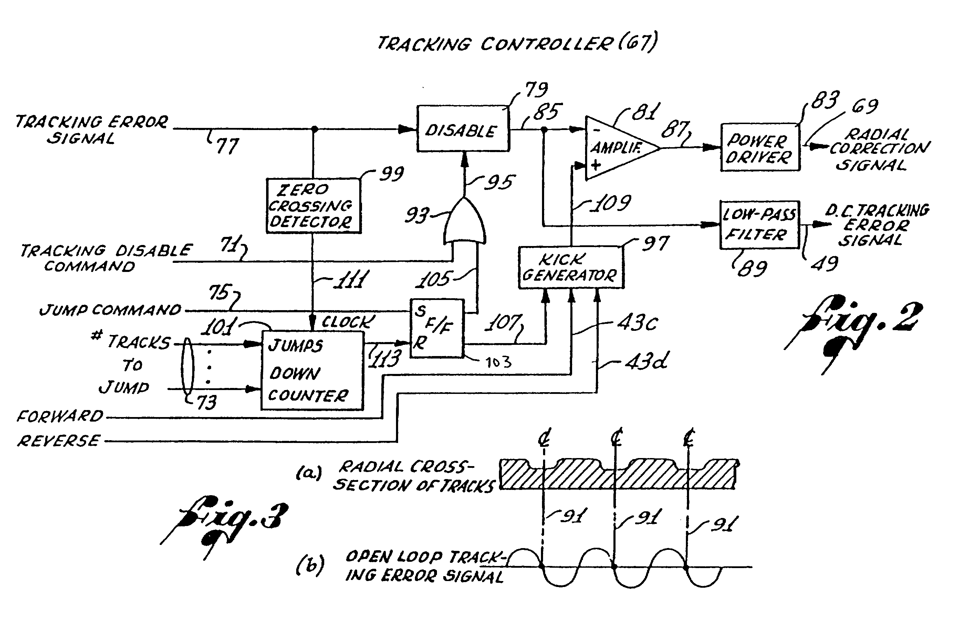

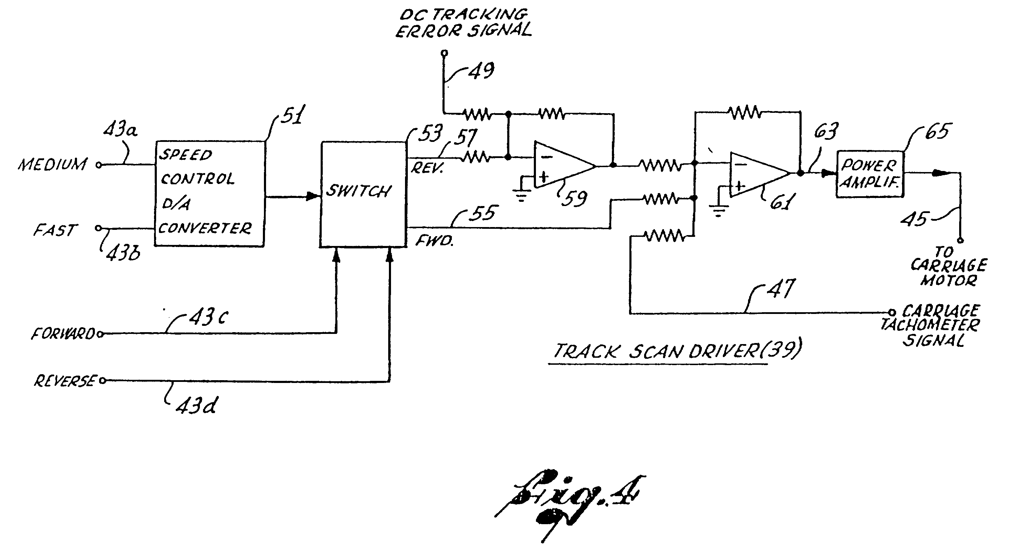

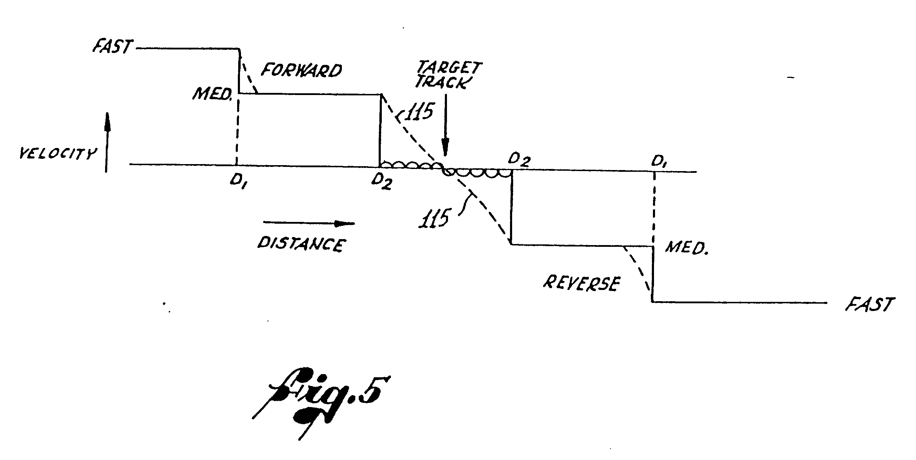

The track scan driver 39 is depicted in greater detail in FIG. 4. It receives the velocity commands on lines 43a-d from the function generator 37 and converts these signals to an appropriate dc drive signal for coupling over line 45 to the carriage motor 31. The driver includes a speed control digital-to-analog (DIA) converter 51 for converting two speed commands, received on lines 43a and 43b, to a corresponding dc voltage signal, and an analog switch 53 for directing the dc signal onto either a forward line 55 or a reverse line 57, in accordance with forward and reverse direction signals received on lines 43c and 43d from the function generator. A first inverting amplifier 59 sums the signal, if any, on the reverse line 57 with the dc tracking error signal supplied on line 49. A second inverting amplifier 61 sums the signal, if any, on the forward line 55 with both the output of the first amplifier 59 and the carriage tachometer signal supplied on line 47 from the tachometer 41. The output of the second amplifier 61 is coupled over line 63 to a power amplifier 65, which produces the carriage motor drive signal for output on line 45.

Referring again to FIG. 1, the fine positioning system further includes a tracking controller 67 for producing a radial correction signal for coupling over line 69 to the movable mirror of the optical system 17. Depending on the operating mode of the apparatus, this signal either maintains the reading beam 11 aligned with a selected target track, or incrementally jumps the beam from track to track while approaching the target track. The tracking controller receives a plurality of track jump commands supplied on lines 71, 73 and 75 from the function generator 37, along with a tracking error signal supplied on line 77 from the detector 23.

When the apparatus is operating in a mode in which the reading beam 11 is to be maintained in alignment with a selected track, the tracking controller 67 merely amplifies the tracking error signal and couples it directly to the movable mirror of the optical system 17, to form a conventional closed loop tracking servo for controllably aligning the beam with the track. On the other hand, when the apparatus is in a search mode in which the beam is to be moved incrementally from track to track, the tracking error signal is uncoupled from the movable mirror, and a prescribed sequence of pulses is coupled in its place. The tracking controller also outputs the dc tracking error signal for coupling over line 49 to the track scan driver 39, so as to reduce Any steady state deflection of the movable mirror by moving the carriage motor 31 in the appropriate direction.

The tracking controller 67 is depicted in greater detail in FIG. 2. It includes a disable or switch circuit 79, an amplifier 81 and a power driver 83, for amplifying the tracking error signal supplied on line 77 and outputting it as the radial correction signal for coupling over line 69 to controllably position the movable mirror of the optical system 17 (FIG. 1). The tracking error signal is coupled through the disable circuit at all times except during the search mode of operation. The output of the disable circuit is coupled over line 85 to the negative input terminal of the amplifier, and the output of the amplifier is, in turn, coupled over line 87 to the power driver, which outputs the radial correction signal. The signal output on line 85 by the disable circuit is also coupled to a low-pass filter 89, to produce the dc tracking error signal for coupling on line 49 to the track scan driver 39 (FIG. 1).

At the beginning stage of each search mode of operation, in which the carriage motor 31 moves the reading beam 11 rapidly toward a target track, the tracking error signal experiences wide variations in level as the beam crosses the successive tracks. With reference to FIG. 3, which is a fragmentary cross-sectional view of the disc 13 showing three recording tracks, it will observed that the open-loop tracking error signal is a large amplitude ac signal having a level of zero at the centerline 91 of each track. The disable circuit 79 uncouples the tracking error signal from the amplifier 81 at this time, to ensure that the apparatus does not attempt to controllably align the reading beam 11 with any track as it moves radially toward the target track.

In the search mode of operation. the coarse positioning system, which includes the carriage motor 31, operates whenever the distance between the target track and the present track exceeds a prescribed threshold, and the fine positioning system, which includes the movable mirror of the optical system 17, operates whenever this distance does not exceed the threshold. When the coarse positioning system is operating, a tracking disable command is coupled over line 71 from the function generator 37 to the tracking controller 67. This signal is coupled through an OR gate 93, and in turn over line 95 to the disable circuit 79, to uncouple the tracking error signal from the amplifier 81. The radial correction signal output by the tracking controller 67 on line 69 therefore has a level of zero, and the movable mirror remains stationary.

After the reading beam has been moved to a position within a prescribed number of tracks of the target track, the function generator 37 (FIG. 1) no longer outputs velocity commands to the track scan driver 39, and the carriage motor 31 is no longer driven at a relatively high speed. A prescribed time delay thereafter, the function generator terminates the tracking disable command previously coupled over line 71 to the tracking controller 67, so that the tracking error signal is again coupled through the tracking controller to form the tracking servo loop for controllably aligning the reading beam 11 with whatever recording track the beam arrives at Thereafter, the tracking controller outputs a prescribed sequence of pulses to jump the reading beam incrementally from track to track until it reaches the target track.

To effect the incremental jumping, the tracking controller 67 includes a kick generator 97, a zero crossing detector 99, a jumps-down counter 101, and a flip-flop 103. When the incremental jumping is to be initiated, a binary code indicating the number of tracks (e.g., 11 tracks) to be jumped during the next half revolution of the disc 13 is supplied on lines 73 from the function generator 37 and entered into the jumps-down counter. Simultaneously, a jump command signal supplied on line 75 from the function generator is coupled to the set direct input terminal of the flip-flop. This sets the Q output signal into the logical "1" state, and this signal is coupled over line 105 to the OR gate 93, and in turn over line 95 to the disable circuit 79, to open the tracking servo loop.

The $\overline{Q}$ output signal of the flip-flop 103 is is coupled over line 107 to the kick generator 97, which responds by outputing a single pulse signal for coupling over line 109 to the positive input terminal of the amplifier 81. This pulse signal is coupled through the amplifier and power driver 83 to the movable mirror of the optical system 17, to accelerate the reading beam 11 in the direction of the target track.

After the reading beam has been accelerated in the direction of the target track by the kick generator 97, the zero crossing detector 99 monitors the open loop tracking error signal (FIG. 3b) supplied on line 77 and outputs a clock pulse each time it detects a track crossing by the beam. These successive clock pulses are coupled over line 111 to the clock terminal of the jumps-down counter 101, to decrement the stored count, accordingly. When the count reaches zero, the counter outputs a reset pulse for coupling over line 113 to the reset direct terminal of the flip-flop 103.

The reset pulse coupled over line 113 to the reset direct terminal of the flip-flop 103 returns the $\overline{Q}$ output signal to the logical "1" state, which triggers the kick generator 97 to output a pulse of opposite polarity to that of the original pulse, thereby decelerating the movable mirror. The reset pulse simultaneously returns the Q output signal of the flip-flop to the logical "0" state, so that the tracking servo loop is no longer disabled by the disable circuit 79 and the loop can again function to controllably align the reading beam 11 with the track then being scanned. During this time, the dc tracking error signal is coupled on line 49 to the track scan driver 39, to controllably move the carriage motor 31 so as to reduce the deflection of the movable mirror.

The reading beam 11 preferably traverses the prescribed number of tracks in substantially less time than that required to rotate the disc 13 through a half revolution. In particular, the beam must traverse tracks at a speed greater than the speed at which track radius changes because of any disc eccentricity.

The kick generator 97 can include two monostable multivibrator or one-shot circuits, one triggered by a positive-going transition and the other by a negative-going transition. The kick generator can further include appropriate gating circuits to ensure that the successive pulses it produces have the correct polarity to move the reading beam 11 in the direction of the target track These gating circuits are responsive to the forward and reverse direction commands supplied on lines 43c and 43d, respectively.

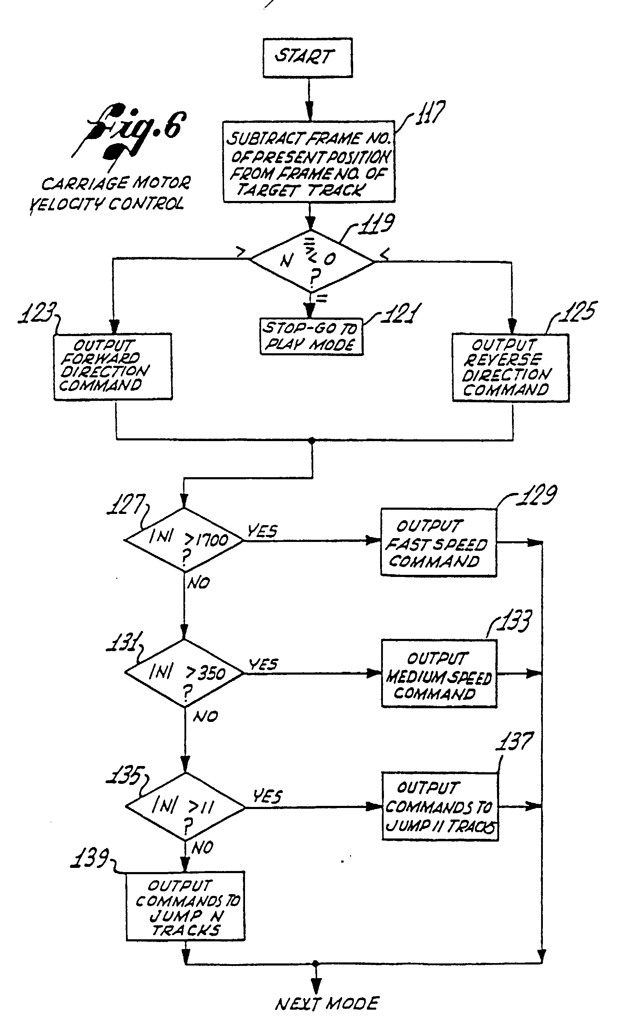

FIG. 5 is a schematic diagram depicting the radial velocity of the reading beam 11 relative to the disc 13, as a function of distance from the target track. As shown in the diagram, if the distance to the target track exceeds a prescribed threshold $D_1$ (e.g., 1700 tracks), the coarse positioning system, which includes the carriage motor 31, drives the beam at a fast speed toward the target track. The apparatus accomplishes this by coupling a fast speed control signal over line 43b from the function generator 37 to the track scan driver 39, which in turn couples a dc drive signal of the appropriate magnitude and direction to the carriage motor.

As soon as the beam crosses the $D_1$ distance threshold, the function generator 37 terminates the fast speed control signal and generates in its place a medium speed control signal for coupling over line 43a to track scan driver 39. This then drives the beam 11 at a medium speed toward the target track. The apparatus continues to drive the beam at that medium speed until the beam has been moved to within a prescribed distance threshold $D_2$ (e.g., 350 tracks) of the target track, at which time the function generator terminates the medium speed control signal and the apparatus permits the carriage motor 31 to slow to a stop, as indicated by the dotted line 115. The selection of the particular distance thresholds $D_1$ and $D_2$ is a matter of mere design choice and should be made in accordance with prescribed characteristics of the apparatus such as the size and inertia of the carriage motor, the maximum deflection of the movable mirror, etc.

Special considerations must be made in a system where the video signal is recorded on the disc 13 with a uniform recording density. Since a variable number of frames are recorded on each track, the difference between the address of the video frame currently being scanned and the address of the target frame does not correspond exactly to the number of tracks remaining to be traversed. This frame address difference can be suitably transformed into a precise measure of track separation based on the numbers of frames per track at the pertinent radii. Alternatively, the frame address difference can be used in its present form as a rough estimate of track separation. Also, since the disc must be rotated at an angular velocity inversely proportional to the radius of the track being scanned, the apparatus preferably limits the velocity of the carriage motor 31 in accordance with the capability of the spindle motor 15 to speed up or slow down.

After the carriage motor 31 has stopped, the tracking servo loop maintains the reading beam 11 aligned with some track in the vicinity of the target track. Thereafter, based on the remaining distance and direction to the target track, the apparatus incrementally jumps the beam toward the target track in a prescribed fashion. If, for example, the beam comes to rest at a track located 69 track spacings short of the target track, the fine positioning system incrementally jumps the beam by eleven track spacings during each of the first six half revolutions of the disc 13, and by three track spacings during the next half revolution, to finally arrive at the target track. Updated track address information is recovered from the disc twice during each revolution, i. e., when the reading beam scans the vertical interval portion of the recorded video signal.

After the reading beam 11 finally reaches the target track, the apparatus can operate, for example, in a stop-motion mode, to scan the track repeatedly and display the recovered video signal. If the successive tracks are arranged in a spiral pattern, the apparatus must jump the beam backward by one track spacing during each disc revolution, preferably during a vertical interval.

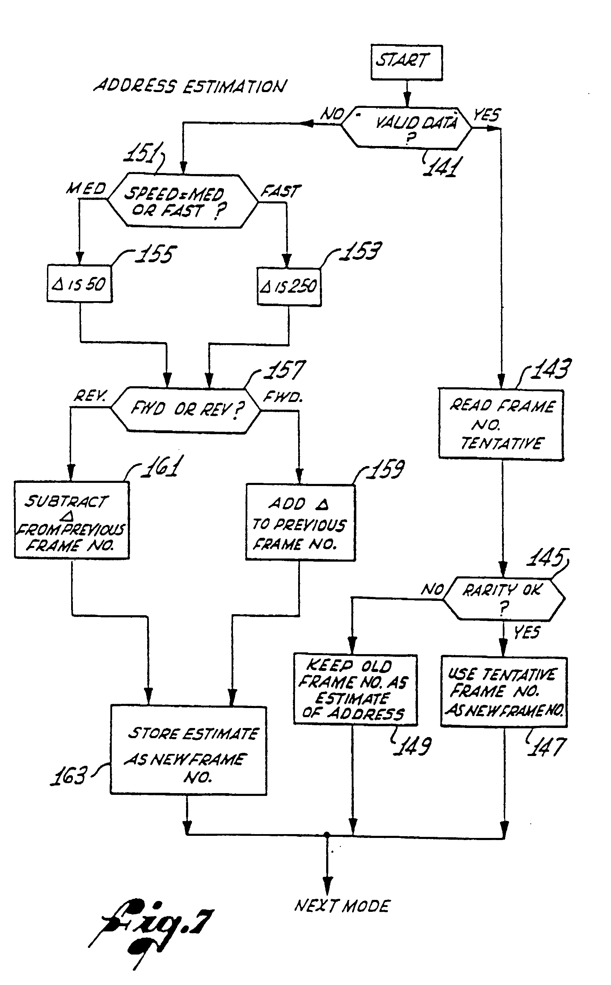

FIG. 6 is a simplified flowchart of the process steps implemented by a microprocessor in the function generator 37 in outputting the velocity and track jump commands when the apparatus is operating in the search mode. The function generator implements the process once during each half revolution of the recording disc 13, immediately after the address recovery circuit 29 detects an address signal in the vertical interval of the recovered video signal. In an initial step 117, the current track address signal is subtracted from the address of the target track, to produce a number N indicating the number of tracks and direction to the target track. Step 119 then compares this number N to zero. If N equals zero, step 121 instructs the microprocessor to proceed to the play mode of operation. If the number N exceeds zero, step 123 outputs a forward direction command on line 43c, whereas if N is less than zero, step 125 outputs a reverse direction command on line 43d.

If a direction command is output by either of steps 123 or 125, the program proceeds to step 127, in which the absolute value of the number N, i.e., INI, is compared a distance threshold of 1700 (D1). If INI exceeds this threshold, step 129 outputs a fast speed command signal for coupling over line 43b to the track scan driver 39. On the other hand, if INI does not exceed the 1700 threshold, the program proceeds to step 131, in which INI is compared to a distance threshold of 350 (D2).

If INI exceeds the threshold, step 133 outputs a medium speed command for coupling over line 43a to the track scan driver 39. On the other hand, if INI does not exceed the 350 threshold, the program proceeds to step 135, in which INI is compared to a distance threshold of 11 (M). If INI exceeds the threshold 11, step 137 outputs a jump command for coupling on line 75 to the tracking controller 67, and simultaneously outputs a binary code for coupling on lines 73 to the tracking controller indicating that the beam should jump by 11 track spacings. On the other hand, if INI does not exceed the threshold 11, step 139 outputs a jump command on line 75 and simultaneously outputs a binary code on lines 73 indicating that the beam should jump by INI track spacings. After the respective commands are output by either of the steps 129, 133, 137, or 139, the program proceeds to the next mode of operation.

As previously mentioned, the address register 30 (FIG. 1) stores the most recently detected track address. This address is ordinarily updated twice during each revolution of the disc 13, i.e., after the reading beam 11 scans the segment of a track recording the vertical interval portion of the video signal. Since the beam sometimes traverses tracks at a relatively high velocity, and since the recorded address code ordinarily includes about 30 to 40 binary bits of information, the address frequently is not properly detected. When this has occurred in the past, prior systems typically continued to move the reading beam at the same velocity as before the address was missed. This frequently caused the beam to overshoot the target track, thereby increasing substantially the time required to reach the target track and recover the information recorded on it.

In accordance with another feature, the apparatus determines whenever it has failed to properly detect a recorded address signal and updates the address register 30 with an estimate of the address of the track currently beng scanned by the reading beam 11. This substantially reduces the likelihood that the beam traverses far beyond the target track, and therefore reduces the average time the apparatus requires to reach the target track and recover the information recorded on it.

FIG. 7 is a simplified flowchart of the process steps implemented by the address recovery and estimator circuit 29 (FIG. 1), in updating the address register 30 with either the most-recently detected current track address or an estimate of the current address. In an initial step 141, each sequence of detected data bits is monitored to determine whether or not it corresponds to a properly recovered address signal. Preferably, each address signal contains about 33 bits of data, indudng 20 address bits, one parity bit, and 12 "framing" bits, half at the beginning of the signal and half at the end. In particular, step 141 determines whether or not the framing bits correspond to a prescribed code. If they do, the data is presumed to be valid.

If step 141 determines the sequence of data bits to be valid, the program proceeds to step 143, where the 20 address bits are tentatively stored as the correct address of the track then being scanned. Thereafter, step 145 checks the parity of the address bits using the detected parity bit. If parity is correct, step 147 updates the address register with the 20 address bits being tentatively stored. If parity is incorrect the tentatively stored address bits are discarded, and step 149 retains the previous address in the address register 30. Ideally, if the program had sufficient time, the previous address would instead be updated with an estimate of the current address.

If step 141 determines the sequence of data bits to be invalid, then an address signal has not been properly recovered and the program proceeds to a series of steps that provide an estimate of the current track address. Specifically, step 151 determines whether a fast speed control signal or a medium speed control signal is being coupled to the track scan driver 39. If a fast signal is being coupled, step 153 defines a variable D to be 250, whereas, if a medium signal is is being coupled, step 155 defines D to be 50.

Thereafter, step 157 determines whether a forward direction signal or a reverse direction signal is being coupled to the track scan driver 39. If a forward direction signal is being coupled, step 159 adds the value of D (i.e., either 50 or 250) to the previously stored address, to produce an estimate of the track currently being scanned. On the other hand, if a reverse direction signal is being coupled, step 151 subtracts the value of D from the previously stored address, to produce a curent track address estimate. Finally, step 163 stores the address estimate produced in either of steps 159 or 161 in the address register 30, as the current track address.

The track address estimation procedure described above is followed only when the carriage motor 31 is driving the reading beam 11 at a medium or fast speed toward the target track. It is not used thereafter, when the movable mirror of the optical system 17 is incrementally jumping the beam from track to track. If the address recovery circuit 29 fails to properly recover an address signal at that time, the previously detected address is retained in the register 30.

**Claims**

1. A method of locating an information-containing target track with a read beam of light (11) from a plurality of substantially circular and concentric information-containing tracks on a rotatable optical recording disc (13), the method comprising the steps of:

   rotating the disc (13) in a prescribed fashion;
   retrieving address information from one of said plurality of tracks to establish a present position for said read beam (11);
   identifying a target track from said plurality of tracks;
   moving said read beam (11) relative to and radially of said disc (13) toward said target track, in a coarse search mode, at a radial velocity greater than that exhibited during normal playback of the disc, from said present position to the vicinity of said target track; and
moving said beam (11) radially of said disc (13) in a fine search mode by jumping said read beam towards said target track across a plurality of tracks; retrieving information from the track arrived at upon completion of said jumping step to establish an updated position for said read beam, and repeating said jumping and retrieving steps at least during each revolution of the disc, until said updated position of said read beam is at said target track, each step of jumping said read beam radially across tracks being carried out in substantially less time than that required to rotate the disc (13) through a half revolution,

   characterised in that, in each said step of jumping said read beam (11) radially across tracks, the number of tracks crossed by the read beam (11) is counted, and, in response to the counting step, movement of the read beam is terminated after the read beam has crossed a prescribed number of tracks; in that said step of retrieving information from the track arrived at upon completion of said jumping step, to establish an updated position for said read beam, occurs during a next half revolution after the jumping step; and in that said jumping and retrieving steps in the fine search mode are repeated during each half revolution of the disc, until said updated position of said read beam is at said target track.

2. A method according to claim 1 in which each of the said steps of jumping the read beam (11) radially across the tracks is effected by supplying a jump pulse to a fine positioning system (17,23,67) which positions the read beam of light (11) during normal information retrieval.

3. A method according to claim 1 or 2 including the step of disabling a tracking servo control loop (21,77,69) which acts during normal information retrieval from the disc (13) to align the read beam (11) with the track being read, the said disabling step comprising disabling the servo control loop (21,77,69) during each of the said steps of jumping the read beam radially, and restoring the servo control loop at the end of each jumping step.

4. A method according to claim 3, including producing a tracking error signal (77) which, during normal information retrieval from the disc, indicates deviation of the read beam (11) from the selected track being read, in which during each jumping step, while the servo loop (21,77,69) is disabled the counting step is effected by counting pulses (11) derived from the tracking error signal (77) as tracks are crossed during the jumping step.

5. A method according to any preceding claim in which each step of jumping said read beam (11) radially across tracks is carried out at a speed greater than the speed at which any substantial track radius change takes place.

## Patentansprüche

1. Verfahren, das mit einem Leselichtstrahl (11) aus einer Vielzahl von im wesentlichen kreisrunden und konzentrischen informationsenthaltenden Spuren auf einer drehbaren optischen Aufzeichnungsplatte (13) eine informationsenthaltende Zielspur auffindet, wobei das Verfahren die Schritte umfaßt:

Drehen der Platte (13) in einer vorgeschriebenen Weise;

Wiedergewinnen der Adreßinformation von einer aus der Vielzahl von Spuren, um eine augenblickliche Position für den Lesestrahl (11) festzulegen;

Identifizieren einer Zielspur aus der Vielzahl von Spuren;

Bewegen des Lesestrahls (11) relativ und radial zur Platte (13) in einem Grobsuchmodus in Richtung auf die Zielspur mit einer Radialgeschwindigkeit, die größer ist als die, die während der normalen Wiedergabe der Platte vorliegt, von der augenblicklichen Position in die Nähe der Zielspur, und

Bewegen des Strahls (11) radial zur Platte (13) in einem Feinsuchmodus, indem der Lesestrahl über eine Mehrzahl von Spuren in Richtung auf die Zielspur springt;

Wiedergewinnen von Information von der nach Vollendung des Sprungschritts erreichten Spur, um eine aktualisierte Position für den Lesestrahl festzulegen, und Wiederholen der Sprung- und Wiedergewinnungsschritte wenigstens während der Umdrehung der Platte, bis sich die aktualisierte Position des Lesestrahls auf der Zielspur befindet, wobei jeder Schritt, der den Lesestrahl radial über Spuren springen läßt, in einer Zeit durchgeführt wird, die wesentlich kleiner ist als die Zeit, die benötigt wird, um die Platte (13) um eine halbe Umdrehung zu drehen, **dadurch gekennzeichnet,** daß in jedem der Schritte, die den Lesestrahl (11) radial über Spuren springen lassen, die Zahl der vom Lesestrahl (11) überquerten Spuren gezählt wird, und als Reaktion auf den Zählschritt die Bewegung des Lesestrahls beendet wird, nachdem der Lesestrahl die vorgeschriebene Zahl von Spuren überquert hat, und dadurch, daß der Schritt des Wiedergewinnens von Information von der nach Vollendung des Sprungschritts erreichten Spur, um eine aktualisierte Position für den Lesestrahl festzulegen, während einer nächsten halben Umdrehung nach dem Sprungschritt auftritt; und dadurch, daß der Sprung- und der Wiedergewinnschritt in dem Feinsuchmodus während jeder halben Umdrehung der Platte wiederholt werden, bis die aktualisierte Position des Lesestrahls auf der Zielspur liegt.

2. Verfahren nach Anspruch 1, bei dem jeder der Schritte des Springens des Lesestrahls (11) radial über die Spuren bewirkt wird, indem einem Feinpositionierungssystem (17, 23, 67), das den Leselichtstrahl (11) während der normalen Informations-Wiedergewinnung positioniert, Sprungimpulse zugeführt werden.

3. Verfahren nach Anspruch 1 oder 2, umfassend den Schritt des Abschaltens einer Nachführservoregelschleife (21, 77, 69), die während der normalen Informations-Wiedergewinnung von der Platte (13) wirksam ist, um den Lesestrahl (11) mit der Spur, die gelesen wird, abzugleichen, wobei der Abschaltschritt das Abschalten der Servoregelschleife (21, 77, 69) während jedes der Radialsprungschritte des Lesestrahls und das Wiederherstellen der Servoregelschleife am Ende eines jeden Sprungschritts umfaßt.

4. Verfahren nach Anspruch 3, umfassend die Erzeugung eines Nachführfehlersignals (77), das während der normalen Informations-Wiedergewinnung von der Platte die Abweichung des Lesestrahls (11) von der gewählten Spur, die gelesen wird, anzeigt, wobei, während jedes Sprungschritts, während die Servoschleife (21, 77, 69) abgeschaltet ist, der Zählschritt durchgeführt wird, indem aus dem Nachführfehlersignal (77) gewonnene Impulse (11) gezählt werden, sowie während des Sprungschritts Spuren überquert werden.

5. Verfahren nach einem der vorangehenden Ansprüche, bei dem jeder Schritt, der den Lesestrahl (11) radial über Spuren springen läßt, mit einer Geschwindigkeit ausgeführt wird, die größer ist als die Geschwindigkeit, mit der irgendeine wesentliche Spurradiusänderung stattfindet.

## Revendications

1. Procédé de localisation d'une piste cible contenant une information par un faisceau de lecture de lumière (11) d'un certain nombre de pistes sensiblement circulaires et concentriques contenant des informations sur un disque d'enregistrement optique rotatif (13), le procédé comprenant les étapes de :

entraîner en rotation le disque '(13) d'une façon prescrite ;
retrouver une information d'adresse à partir de l'une de la pluralité de pistes pour établir une position actuelle pour le faisceau de lecture (11) ;
identifier une piste cible à partir de ladite pluralité de pistes ;
déplacer ledit faisceau de lecture (11) par rapport audit disque (13) et radialement à celui-ci vers ladite piste cible, dans un mode de recherche grossier, a une vitesse radiale supérieure a celle présentée pendant la lecture normale du disque, de ladite position actuelle au voisinage de ladite piste cible ; et
déplacer ledit faisceau (il) radialement dudit disque (13) dans un mode de recherche fin en sautant ledit faisceau de lecture vers ladite piste cible à travers une pluralité de pistes ; retrouver une information de la piste arrivée lors de l'achèvement de l'étape de saut pour établir une position de remise à jour audit faisceau de lecture, et répétant lesdites étapes de saut et de restitution au moins pendant chaque révolution du disque, jusqu'à ce que ladite position de remise à jour dudit faisceau de lecture soit à ladite piste cible, chaque étape de sauter le faisceau de lecture radialement à travers des pistes est accomplie en une période sensiblement inférieure à celle exigée pour entrainer en rotation le disque (13) d'une moitié de résolution,

caractérisé en ce que, dans chaque dite étape de saut du faisceau de lecture (11) radialement à travers des pistes, le nombre de pistes traversées par le faisceau de lecture (11) est compté, et, en réponse à l'étape de comptage, un déplacement du faisceau de lecture est terminé après que le faisceau de lecture a traversé un nombre prescrit de pistes, en ce que ladite étape de restitution d'information de la piste arrivée lors de l'achèvement de ladite étape de saut, pour établir une position de remise à jour audit faisceau de lecture, se produit pendant une moitié de révolution suivante après l'étape de saut ; et en ce que lesdites étapes de saut et de restitution dans le mode de recherche fine sont répétées pendant chaque moitié de révolution du disque, jusqu'à ce que ladite position de remise a jour dudit faisceau de lecture soit a ladite piste cible.

2. Procédé selon la revendication 1 dans lequel chacune des étapes précitées de sauter le faisceau de lecture (11) radialement à travers les pistes est effectuée en fournissant une impulsion de saut à un système de positionnement fin (17, 23, 67) qui positionne le faisceau de lecture de lumière (11) pendant la restitution d'information normale.

3. Procédé selon la revendication 1 ou 2 comprenant l'étape de désactiver une boucle de servo-commande de suivi (21, 77, 69) qui agit pendant la restitution d'information normale du disque (13) pour aligner le faisceau de lecture (11) avec la piste en train d'être lue, ladite étape de désactivation comprenant la désactivation de la boucle de servo-commande (21, 77, 69) pendant chacune des étapes de sauter le faisceau de lecture radialement, et la restauration de la boucle de servo-commande à la fin de chaque étape de saut.

4. Procédé selon la revendication 3, comprenant la production d'un signal d'erreur de suivi (77) qui, pendant la restitution d'information normale du disque, indique un écart du faisceau de lecture (11) de la piste choisie en train d'être lue, dans lequel pendant chaque étape de saut, pendant que la servo-boucle (21, 77, 69) est désactivée, l'étape de comptage est effectuée en comptant des impulsions (11) dérivées du signal d'erreur de suivi (77) lorsque les pistes sont traversées pendant l'étape de saut.

5. Procédé selon l'une quelconque des revendications précédentes dans lequel chaque étape de saut de faisceau de lecture précité (11) radialement à travers des pistes est accomplie à une vitesse supérieure a la vitesse à laquelle tout changement de rayon substantiel de piste prend place.

Fig.1

TRACKING CONTROLLER (67)

Fig. 2

Fig. 3

(a) RADIAL CROSS-SECTION OF TRACKS

(b) OPEN LOOP TRACK-ING ERROR SIGNAL

EP 0 495 530 B2

*Fig. 4*

TRACK SCAN DRIVER (39)

MEDIUM  43a

FAST  43b

FORWARD  43c

REVERSE  43d

SPEED CONTROL D/A CONVERTER  51

SWITCH

53  57
REV.
55
FWD.

DC TRACKING ERROR SIGNAL  49

59

61  63

POWER AMPLIF.  65

45
TO CARRIAGE MOTOR

47  CARRIAGE TACHOMETER SIGNAL

FAST ── 
MED.
FORWARD
TARGET TRACK
115
VELOCITY
$D_1$
$D_2$
115
$D_2$
$D_1$
DISTANCE
MED.
REVERSE
FAST

**Fig.5**

*fig.6*

CARRIAGE MOTOR
VELOCITY CONTROL

START

SUBTRACT FRAME NO.
OF PRESENT POSITION
FROM FRAME NO. OF
TARGET TRACK — *117*

*119*
N $\leq$ 0
?

> 

123
OUTPUT
FORWARD
DIRECTION
COMMAND

STOP-GO TO
PLAY MODE — *121*

=

< 

125
OUTPUT
REVERSE
DIRECTION
COMMAND

127
|N| >1700
?

YES

*129*
OUTPUT
FAST SPEED
COMMAND

NO

131
|N| >350
?

YES

*133*
OUTPUT
MEDIUM SPEED
COMMAND

NO

135
|N| >11
?

YES

*137*
OUTPUT
COMMANDS TO
JUMP 11 TRACKS

NO

139
OUTPUT
COMMANDS TO
JUMP N
TRACKS

NEXT MODE

14

ADDRESS ESTIMATION

START

VALID DATA ? — *141*

NO → YES

*151* SPEED = MED OR FAST ?

MED → *155* Δ IS 50

FAST → *153* Δ IS 250

*157* FWD OR REV ?

REV. → *161* SUBTRACT Δ FROM PREVIOUS FRAME NO.

FWD. → *159* ADD Δ TO PREVIOUS FRAME NO.

*143* READ FRAME NO. TENTATIVE

*145* RARITY OK ?

NO → YES

*163* STORE ESTIMATE AS NEW FRAME NO.

*149* KEEP OLD FRAME NO. AS ESTIMATE OF ADDRESS

*147* USE TENTATIVE FRAME NO. AS NEW FRAME NO.

NEXT MODE

*Fig.7*